# EUROPEAN PATENT SPECIFICATION

(11) **EP 2 884 027 B1**
(45) Date of publication and mention of the grant of the patent: **21.09.2016**
(21) Application number: 14197469.1
(22) Date of filing: 11.12.2014
(51) Int. Cl.: E04H 12/08, F16B 7/04, F16L 21/08, E02D 27/42, E02D 27/52, F16B 2/14, F16L 23/02

(54) **Connector assembly for affixing two tubular members**
Verbinderanordnung zur Verbindung zweier rohrförmiger Elemente
Ensemble connecteur pour relier deux éléments tubulaires

(30) Priority: 12.12.2013 GB 201321989
(43) Date of publication of application: 17.06.2015
(73) Proprietor: Claxton Engineering Services Limited, Great Yarmouth NR30 1TE (GB)
(72) Inventor: Patterson, Rowan Warwick, Beccles, NR34 0EA (GB); Marcantonio, Matthew, Norwich, NR2 2BL (GB)
(74) Representative: Dummett Copp LLP

(56) References cited:
- EP-A1- 2 441 955
- WO-A1-2010/109251
- WO-A1-2011/007065
- US-A1- 2008 056 906

## Description

### BACKGROUND

### a. Field of the Invention

The invention relates to a connector assembly for affixing an upper tubular member to a lower tubular member in an upright configuration of said tubular members. In particular, the invention relates to a bladed fluid flow electrical generator comprising such a connector assembly.

### b. Related Art

Offshore wind turbine towers typically have an upper main tower with a tubular body, the lower end of which has a flange to which is welded a tubular transition piece that extends downwards from the tubular body for connection to a tubular base of a lower supporting structure. When the water is relatively shallow, for example of the order of 10 m to 20 m, the lower supporting structure may be a single tubular pile drilled or driven into the seabed. A hollow cylindrical transition piece is attached at the lower end of the main tower, for example by slotting over the upper end of the pile, which therefore provides the tubular base. Alternatively, when the water is deeper, the lower supporting structure may include a framework structure formed from a lattice of structural members supported by a number of seabed piles and terminated at an upper end by a tubular member that forms the tubular lower base structure for the turbine tower.

When the upper tubular tower is to be connected to the tubular base of the lower supporting structure, the tubular transition piece, which has an inner diameter greater than the outer diameter of the tubular base, is inserted over the tubular base. Typically, the drilled or driven pile is installed with its axis aligned to within 0.5° of vertical.

In general, wind velocity is higher at points further above the surface of the land or water than at points closer to the surface of land or water owing to decreased surface aerodynamic drag by land or water surfaces. Therefore, there is an advantage in maximising the height at which wind turbine blades operate. The tallest wind turbines have an upper main tower more than 100 m in height. At a height of 100 m, a misalignment of 0.5° of the main tower with respect to vertical will result in a tilt of about 90 cm from vertical at the top of the upper main tower. Such a lean will add to the moment loads to be applied to the foundations of the wind turbine. To compensate for this amount of misalignment, it then becomes necessary to increase the strength of the main tower and lower supporting structure and foundations. Ideally the tower needs to be as close to vertical as possible to ensure even loading on the tower and turbine.

Therefore, in order to permit adjustment of the axial alignment between the tubular body of the upper main tower and the lower tubular base, it is known to provide a clearance gap between the outer tubular transition piece and the inner tubular base. The gap allows a certain degree of movement between the tubular body of the main tower and the tubular base prior to these being fixed in place with respect to each other, and also accommodates the fact that such tubular members, which may be around 6 m in diameter, may be slightly oval with a deviation from circularity of up to about ± 1.5% and with a tolerance on nominal diameter of about ± 1.0%.

The transition piece, which may weigh 200 tonnes, is suspended by a crane, and then the orientation of the transition piece is adjusted until this is sufficiently close to vertical. The orientation and spacing between the transition piece and the tubular base is then set by internal pads and jacks inside the gap at the top of the pile and then fixed in place with a high quality epoxy grout inserted between the outer wall of the pile and the inner wall of the tubular transition piece. The grout may take about one week to cure.

A number of problems have been noted with this alignment and setting procedure.

It takes time for the grout to set, during which the main transition piece has to be kept carefully in place sitting on the jacks and the jacks are then later removed, all of which proves to be very time consuming and expensive. Furthermore, the grout interface has in some cases shown a tendency over time to break up, resulting in an insecure foundation and expensive remedial work.

A solution to these problems has been proposed in EP 2441955 A1, which concerns a connector assembly for joining an upper main tower to a lower base structure. The connector assembly comprises a first connector portion in the form of a ring and a second connector portion in the form of a collar which receives the ring. One connector portion is affixed to the main tower and the other connector portion is affixed to the base structure. The collar has clamps built in to the collar which engage with a flange that extends outwardly around the ring. The ring and collar include surfaces permitting tilt adjustment of the connector portions prior to engagement of the clamps, thereby allowing the tilt angle to be set.

A problem with such prior art assemblies is that the provision of the necessary tilt adjustment surfaces and clamping means makes the connector portions very complex. Additionally, the connector portions are often in the region of 3 m to 6 m in diameter. It is time consuming and inconvenient to have to machine, drill and mill such very large components to provide the necessary features. The manufacture of these components is, therefore, difficult and expensive.

It is an object of the present invention to provide an improved connector assembly for affixing an upper tubular member to a lower tubular member in an upright configuration of the joined tubular members, particularly when the connector assembly is for connecting relatively large diameter (e.g. 3 m or more in diameter) tubular components such as those used to support a bladed fluid flow electrical generator.

### SUMMARY OF THE INVENTION

According to a first aspect of the invention, there is provided a connector assembly for affixing an upper tubular member to a lower tubular member in an upright configuration of said tubular members, the connector assembly comprising a first connector portion and a second connector portion, the first connector portion having a first mounting portion and the second connector portion having a second mounting portion, one of said mounting portions being for affixing at an upper end of said lower tubular member and the other of said mounting portions being for affixing at a lower end of said upper tubular member, the first connector portion comprising a ring, the ring extending around a ring axis and comprising a radially outwardly directed flange, and the second connector portion comprising a collar and a plurality of clamping modules, the collar extending around a collar axis and comprising a clamping portion and a radially inwardly directed lip, wherein:
- the clamping portion of the collar has an opening for receiving the ring whereby the ring may, in use, be received within the collar in a substantially coaxial orientation with the flange in abutting contact with the lip;
- the clamping portion of the collar has a plurality of apertures, each aperture extending through said clamping portion in a radial direction and said apertures being spaced apart from each other around a circumference of said clamping portion;
- each clamping module comprises a housing, a clamping member and a clamping actuator, said clamping member being movably held within said housing and said clamping actuator being configured to drive said movement of the clamping member; and
- each of said housings is separately affixed to the clamping portion of the collar at a corresponding one of said apertures whereby each clamping member when driven by the clamping actuator moves radially inwards through said corresponding aperture towards the ring received within the collar whereby said flange is clamped between the lip and said clamping members in order to secure the ring within the collar.

According to a second aspect of the invention, there is provided an assembly of an upper tubular member and a lower tubular member, said tubular members being joined together by a connector assembly, said connector assembly being according to the first aspect of the invention.

In preferred embodiments of the invention, each aperture extends from a radially inner surface of the collar to a radially outer surface of the collar.

Each one of the actuators is preferably positioned radially outwards of the collar and is configured to drive the clamping member radially inwardly through a respective aperture.

In preferred embodiments of the invention, a main portion of the housing extends radially away from a radially outer surface of the clamping portion of the collar and each housing extends through the respective aperture in the collar clamping portion.

Preferably, the lip extends radially inwardly from the clamping portion.

Each of the housings may have a mount that is in abutting contact with a radially inwardly directed feature of the collar clamping portion, this abutting contact securing the housing against radially outward movement of the housing.

In a preferred embodiment of the invention, each mount includes a first mounting surface and each mounting feature of the clamping portion of the collar is a second mounting surface, said first and second mounting surfaces being in contact with each other and cooperating so as to transfer forces from each housing to the collar clamping portion when each of the respective clamping members is engaged with the ring to clamp the flange.

The housing may comprise a main body, in which case the housing mount may be provided by a projection from the main body of the housing. This projection preferably extends laterally to a direction of motion of the clamping member.

The mounting feature of the collar is preferably an inwardly directed surface inside the aperture. When the aperture is substantially circular, the mounting feature will be directed radially inwards relative to a central axis of the aperture.

In preferred embodiments of the invention, this inwardly directed surface is a shoulder in a side wall of the aperture. The shoulder may extend around a periphery of the aperture.

In preferred embodiments of the invention, the projection and shoulder have matching annular shapes.

Each housing when affixed to the clamping portion of the collar may have an end which is substantially flush with a radially inner surface of the clamping portion.

Each housing may comprise a first passageway and a second passageway, the movement of the clamping member being guided by the first passageway, and the clamping actuator being movably held in the second passageway, and the second passageway intersecting the first passageway.

Each clamping module may be welded to the collar clamping portion.

In general, the flange extends radially outwardly from a main or inner portion of the ring and has opposite first and second sides, each side extending in a direction that is transverse to the ring axis.

The flange may have a first alignment surface and the lip may have a second alignment surface.

The alignment surfaces may permit relative tilt adjustment between the ring axis and the collar axis prior to clamping of the flange. These alignment surfaces may be in contact along a part spherical interface.

Alternatively, the alignment surfaces may permit the setting of just one relative angle of the ring axis relative to the collar axis prior to said clamping of the flange. In this case, the alignment surfaces are in contact along a flat interface. The relative angle may be zero, i.e. with the axes being collinear.

In preferred embodiments of the invention, the first and second alignment surfaces transfer the weight of the tower to the lower base structure.

The clamping modules are preferably spaced apart from one another around the circumference of the collar.

### BRIEF DESCRIPTION OF THE DRAWINGS

The invention will now be further described, by way of example only, and with reference to the accompanying drawings, in which:
Figure 1 is a view of a first type and a second type of turbine tower assembly for generating electric power from the wind, each type comprising a connector assembly according to a first preferred embodiment of the present invention, the connector assembly having a collar joined to an upper tubular main tower and a ring joined to a lower tubular supporting base;
Figure 2 is a perspective view of the connector assembly of Figure 1 fully assembled, showing how the collar has around its circumference a plurality of separate clamping modules, each with a housing that extends radially away from a clamping portion of the collar;
Figure 3 is a side view of the connector assembly of Figure 2;
Figure 4 is a cross-sectional view of the connector assembly along the line IV-IV of Figure 3;
Figure 5 is a detailed cross-sectional view of a part of the connector assembly of Figure 4, showing how the ring has an outwardly directed flange that is clamped between an inwardly directed lip of the collar and an inwardly movable clamping member that is housed inside the housing;
Figure 6 is an exploded view of components forming the clamping module, with a main portion of the housing being connected to the clamping portion of the collar;
Figure 7 is a perspective view showing how the main portion of the housing is assembled with a corresponding aperture through the collar clamping portion;
Figure 8 is a cross-sectional view showing the main portion of the housing seated in the collar aperture;
Figure 9 is a cross-sectional view of the collar, prior to assembly of the collar clamping modules to the clamping portion of the collar;
Figure 10 is a cross-sectional view of the ring, showing how the lip projects outwardly from an inner band of the ring;
Figure 11 is a cross-sectional view of a drive member of the clamping module of Figure 6, showing a preferred geometry of a drive member;
Figure 12 is a cross-sectional view of a driven clamping member of the clamping module of Figure 6, showing a preferred geometry of the clamping member;
Figure 13 is a view of a third type of turbine tower assembly for generating electric power from flowing water, comprising a submerged water turbine having a connector assembly according to a second preferred embodiment of the present invention, this connector assembly having a collar joined to an upper tubular member and a ring joined to a lower tubular supporting member;
Figure 14 is an exploded view of the connector assembly of Figure 13, showing the components forming one of a plurality of clamping modules spaced apart around the collar, a guide assembly to aid assembly of the collar to the ring and a secondary release ring for pulling the collar away from the ring;
Figure 15 is a cross-sectional view of the connector assembly of Figure 14, in an assembled configuration;
Figure 16 is a cross-sectional view of the collar of Figure 14, prior to assembly of the collar clamping modules to a clamping portion of the collar;
Figure 17 is a cross-sectional view of a drive member of the clamping module of Figure 14, showing a preferred geometry of a drive member;
Figure 18 is a cross-sectional view of a driven clamping member of the clamping module of Figure 14, showing a preferred geometry of a clamping member;
Figure 19 is a cross-sectional view of a part of a preferred embodiment of the connector assembly of Figure 13, before the collar is lowered to surround the ring, showing in particular a guide post and a socket for alignment of the collar and ring;
Figure 20 is a cross-sectional view of the connector assembly of Figure 19, showing the collar and ring assembled and the guide post engaged in the socket; and
Figure 21 is a detailed cross-sectional view of the guide post and socket of Figure 20 showing a gap between the guide post and socket.

### DETAILED DESCRIPTION

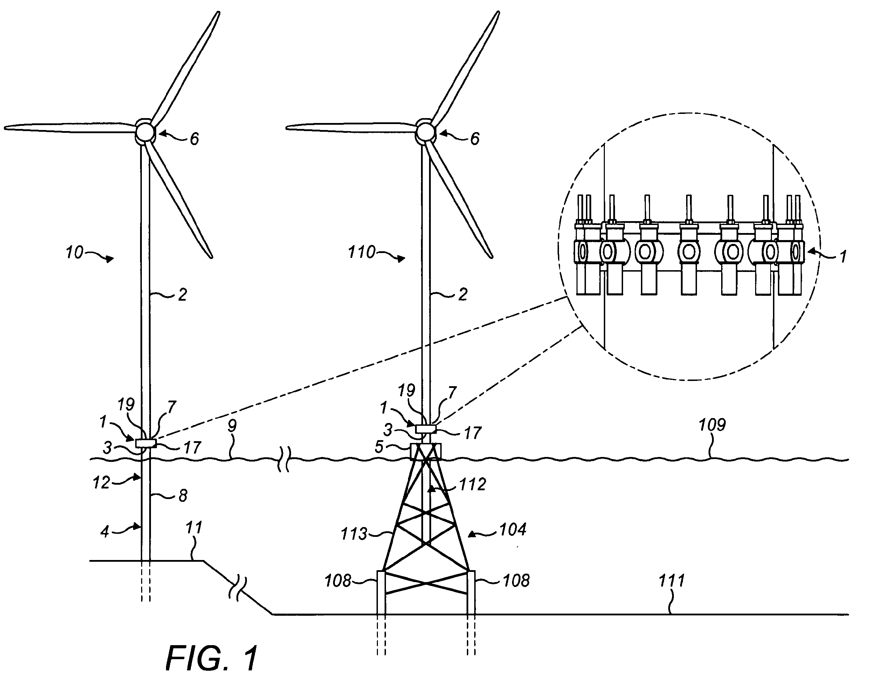

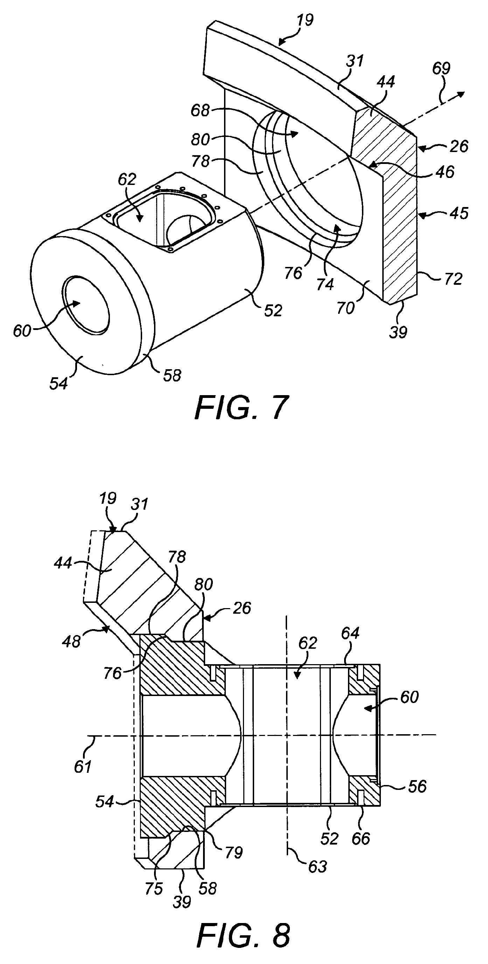

A first embodiment of the invention is illustrated in Figures 1 to 12. Figure 1 shows two different types of turbine tower assemblies 10, 110 standing in a body of water 9, 109, for generating electric power from the wind.

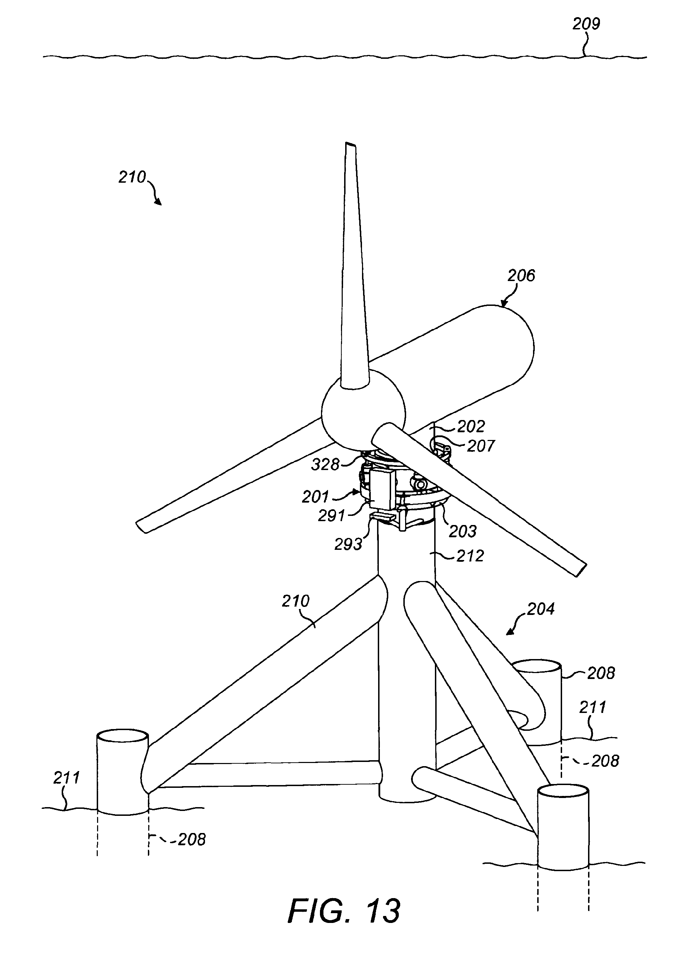

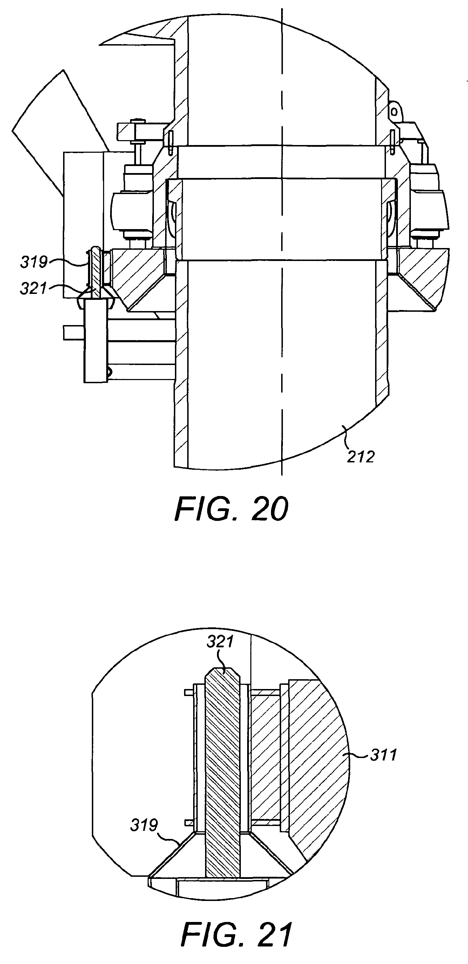

A second embodiment of the invention is illustrated in Figures 13 to 21. Figure 13 shows a third type of turbine tower assembly 210, submerged in a body of moving water 209, for generating electric power from the tide or river flow.

Although not illustrated, the invention is also applicable to wind turbine assemblies on dry land. All such turbine assemblies that extract renewable energy from a freely flowing medium, whether of the horizontal or vertical axis type, are referred to herein as "fluid flow electrical generators".

In each of the illustrated embodiments, a lower base structure 4, 104, 204 stands on a bed 11, 111, 211 of a body of water 9, 109, 209, for example supported on piles 8, 108, 208 driven into the seabed 111, 111 or river bed 211.

The first preferred embodiment of the invention provides a connector assembly 1 for affixing an upper tubular member 2 providing a main tower to a lower tubular member 12, 112 of a base structure 4, 104. The tower 2 supports a horizontal-axis wind turbine generator 6.

The invention is suitable for use in a variety of situations. For example, when the seabed 11 is relatively shallow, the lower base structure 4 may be formed from a single tubular body or member 12 that also provides a tubular pile 8 that is driven into the seabed.

The invention is also suitable for use when the seabed 111 is relatively deeper. In this case, the turbine tower assembly 110 is supported by a lower base structure 104 comprising a lattice framework structure 113 that is anchored to the bed 111 by at least three and preferably four piles 108. The lower base structure 104 also comprises the lower tubular member 112 of the second embodiment of turbine tower assembly 110. This lower tubular member 112 is supported by the lattice framework structure 113 and extends upwards from an upper end 5 of the latticework framework structure.

Each of the lower tubular members 12, 112 therefore provides a base support for the respective upper tubular member 2.

Although not illustrated, the invention is also applicable in deeper water applications, in which the turbine tower assembly has a lower tubular member supported by a submerged buoyancy module that is tethered by lines to the sea bed.

In use, each connector assembly 1 can support the weight of a typical wind turbine generator, currently up to 1,400 tonnes, when clamped to the tubular supporting member 12, 112, which in this example is approximately 6 m in diameter. The connector assembly 1 can also accommodate a deviation from circularity in such a tubular supporting member which may, for example, be up to about ± 1.5% and with a tolerance on nominal diameter of about ± 1.0%.

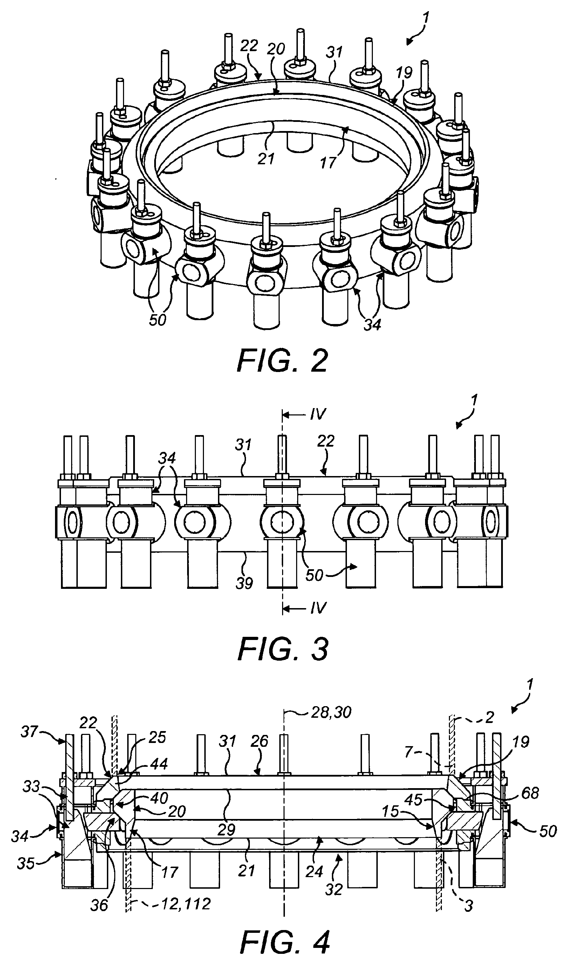

Figures 2 to 12 show in more detail the components making up the connector assembly 1. The connector assembly 1 is typically formed primarily from steel and comprises a first connector portion 20 and a second connector portion 22. The first connector portion 20 has at one axial end 21, which in this example is a lower end, a first mounting portion 17 that is configured to be affixed at an upper end of the lower tubular member. In this example, the first mounting portion 17 is welded or otherwise connected at a seam 15, to an upper circular end 3 of the lower tubular member 12,112.

The second connector portion 22 has at one axial end 31, which in this example is an upper end, a second mounting portion 19 that is configured to be affixed at a lower end of the upper tubular member. In this example, the second mounting portion 17 is welded or otherwise connected at a seam 25 to lower circular end 7 of the upper tubular member 2. In embodiments in which the connections are formed by welds, the welds may be facilitated by a taper, a flange or some other features at the weld interface.

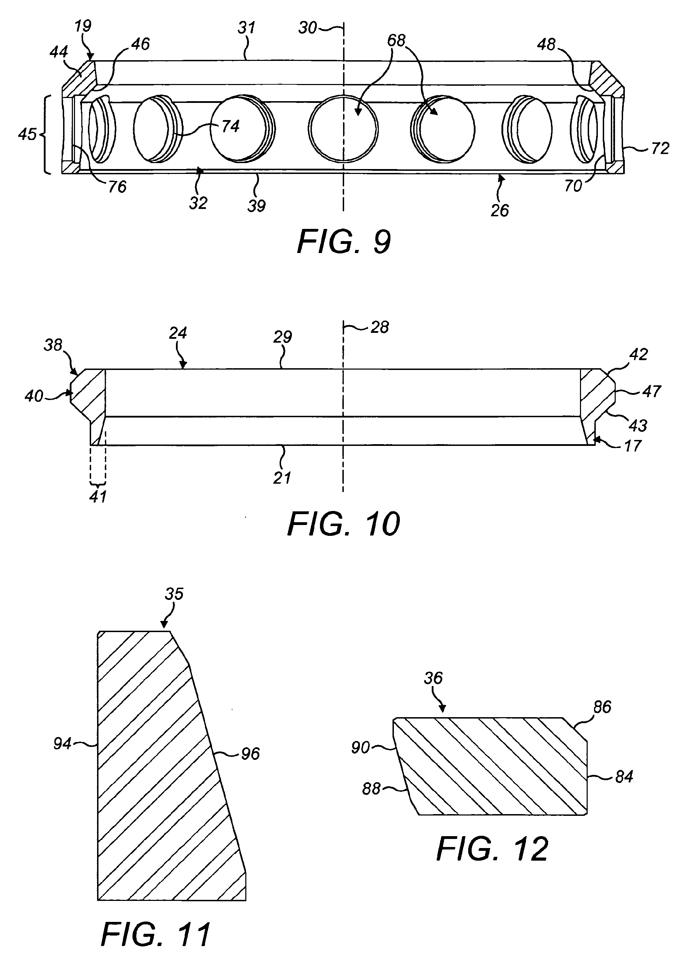

As shown most clearly in Figure 10, the first connector portion 20 is formed from a tubular section in the form of a ring that provides a seat 38 on one side of a connector interface. As will be described in more detail below, this side of the connector interface includes a spherically convex annular surface 42 that faces outwards towards the second connector portion 22.

The second connector portion 22 is formed from a tubular section in the general form of a ring that provides an abutment 46 for the other side of the connector interface. As will be described in more detail below, this side of the connector interface includes a concave annular surface 48 that faces inwards towards the convex annular surface 42 of the first connector portion 20. The radii of curvature of these annular surfaces are the same.

When the first and second connector portions 20, 22 are brought together, the abutment 46 interfaces with and sits down on the seat 38 to provide for angular adjustment between the first and second connector portions 20, 22 to provide accurate adjustment for verticality of the upper tower, which will also be when the lower end 7 of the main tower is level.

The first connector portion 20 comprises a generally circular ring 24 and the second connector portion 22 comprises a generally circular collar 26 for receiving the ring in a substantially co-axial orientation. In this example, the ring 24 is a unitary or one-piece component and therefore the first connector portion 20 consists solely of the ring. Both the ring and collar have outermost and innermost prevailing profiles or surfaces that have a cylindrical symmetry. As shown most clearly in Figure 10, the ring 24 has a flange 40 which extends outwards from a main band or inner band 41 that extends fully around the inner circumference of the ring, between opposite axial ends 21, 29 of the ring. The flange 40 therefore extends radially outwardly from the main band 41 of the ring. The flange 40 and the first mounting portion 17 are directly adjacent one another in an axial direction.

As shown in Figure 9, the collar 26 has a clamping portion 45 and a lip 44 that extends or projects radially inwardly from the clamping portion of the collar. The lip 44 and clamping portion 45 are directly adjacent one another in an axial direction.

Both the ring 24 and the collar 26 are substantially circular or annular in shape such that the ring defines or extends around a ring axis 28, and the collar defines or extends around a collar axis 30. The clamping portion 45 of the collar also has an opening 32 at one axial end 39 of the collar, which in this example is a lower end for receiving both the entire ring including the flange 40 of the ring 24 within the clamping portion. Preferably, this is after said affixing of both connector portions to respective ones of the tubular members. As such, when the first and second connector portions 20, 22 are engaged with each other, at least the clamping portion 45 of the collar 26 surrounds the ring 24. The second connector portion 22 further comprises a plurality of clamping modules 34 affixed to the clamping portion of the collar, each clamping module being spaced apart or separate from the other clamping modules.

As shown in Figure 4, the ring and the collar may be clamped together such that the ring axis 28 and collar axis 30 are collinear; however, the connector assembly 1 is configured to allow the alignment of these two axes 28, 30 to be varied within about 1.5° of each other in any direction so that any tilt of the tubular base support 12, 112 away from vertical within these limits can be accommodated to achieve a vertical orientation of the main tower 2.

The ability to compensate for this amount of misalignment is provided by a pivot interface between the first and second connector portions 20, 22 provided by the seat 38 and abutment 48. The flange 40 extends radially outwardly from an axial end 29 of the ring 24 opposite the end 21 having the connector portion 17. The convex annular surface 42 of the seat 38 provides a first alignment surface that extends from the main inner portion 41 of the ring in a direction that is transverse to the ring axis 28. The convex annular surface, therefore, faces both radially away from the ring axis 28 and in one axial direction towards the second connector portion 22. This curved surface 42 therefore provides a taper on one side of the flange 40.

The lip 44 of the collar 26 extends radially inwardly around the upper edge 31 of the collar 26. The convex annular surface 48 of the abutment 46 provides a second alignment surface extends from the clamping portion 45 of the collar in a direction that is transverse to the collar axis 30. This concave annular surface therefore faces both radially towards the collar axis 30 and in one axial direction towards the first connector portion 20.

When the first and second connector portions 20, 22 are engaged with each other, the second alignment surface 48 of the abutment 46 contacts the first alignment surface 42 of the seat 38, such that the collar 26 is seated on the ring 24. In this position the radius of curvature of the second alignment surface 48 is centred on the same point as that of the first alignment surface 42. Until clamped by a clamping member 36, which will be described in more detail below, the contact between the seat 38 and the abutment 46 is, therefore, along an interface which acts similarly to that of a ball and socket joint and which permits tilt adjustment of the ring axis 28 and collar axis 30.

In use, the contact of the abutment 46 with the seat 38 serves to transfer the weight of the main tower 2 to the tubular base support 12, 112 and base structure 4, 104. Once adjusted for the correct tilt alignment, the angular orientation of the ring 24 within the collar 26 is set using the clamping members 36 provided by the clamping modules 34.

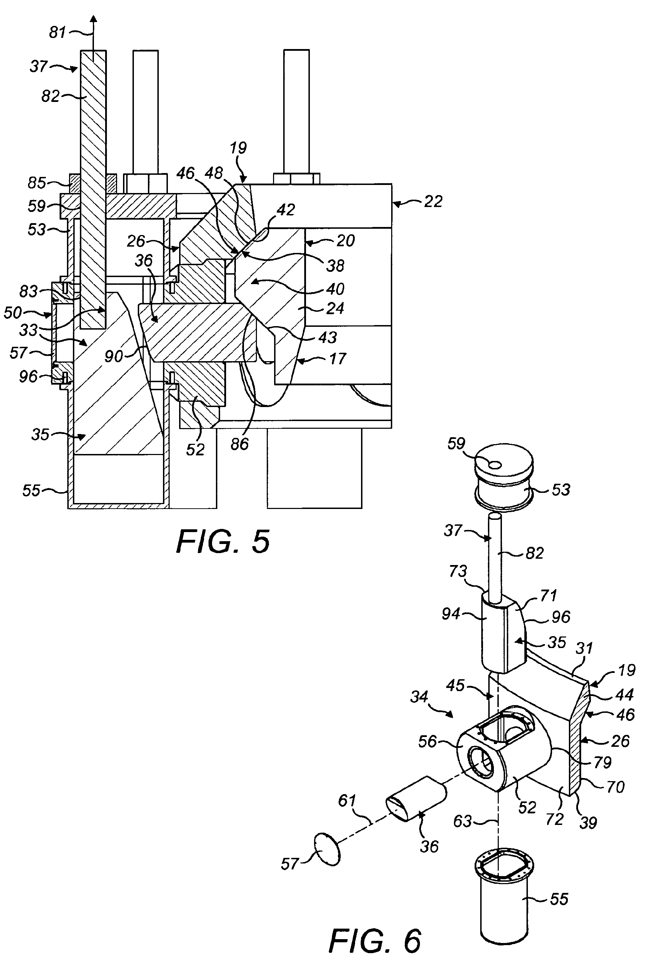

Each of the clamping modules 34 comprises a housing 50 that is secured to the collar 26. As shown most clearly in Figures 5 to 8, the housing 50 comprises a main body portion in the form of generally cylindrical hollow body 52 having opposing first and second ends 54, 56. A projection in the form of an annular flange 58 extends outwardly around the main body 52 at the first end 54 to provide a mount in the form of a first mounting surface 75. A first passageway or bore 60 extends through the body 52 from the first end 54 to the second end 56. A second passageway or bore 62 extends through the body between a first side 64 of the body 52 and a second side 66, in a direction substantially perpendicular to an axis 61 of the first bore 60. The second bore 62 therefore has an axis 63 that intersects the first bore 60 at a right angle.

The housing 50 is received in an aperture 68 formed in the collar 26. The aperture 68 extends through the collar from a radially inner surface 70 of the collar clamping portion 45 to a radially outer surface 72 of the collar clamping portion. In this embodiment the aperture is circular and the first end 54 of the housing is a flat annulus which is substantially flush with the adjacent cylindrical inner surface 70 of the collar clamping portion. A side wall 74 of the aperture 68 includes around its periphery a shoulder 76, providing an inwardly directed second mounting surface, such that a diameter of a first part 78 of the aperture 68 proximate the inner surface 70 is greater than a diameter of a second part 80 of the aperture 68 proximate the outer surface 72 of the collar 26.

To secure the housing 50 to the collar 26, the housing 50 is inserted, second end 56 first, through the aperture 68 in a direction 69 from the inner surface 70 towards the outer surface 72 of the collar 26. The body 52 and flange 58 of the housing 50 are sized such that the first mounting surface 75 of the flange 58 engages with and comes into abutting contact with the second mounting surface 76 provided by the shoulder 76 of the aperture wall 74. The co-operation of the flange 58 with the shoulder 76 prevents the housing 50 being pushed fully through the aperture 68 in a radially outwards direction 69 from the inner surface 70 towards the outer surface 72 of the collar 26. The housing 50 is thereby secured in an orientation in which the axis 61 of the first bore is perpendicular to the collar axis 30 and in which the axis 63 of the second bore 62 is parallel to the collar axis 30.

Once the housing 50 is fully engaged in the aperture 68, with the flange 58 in touching contact with the outer portion 78 of the aperture and with the body 52 protruding from the outer surface 72 of the collar clamping portion 45, the housing 50 is secured to the collar 26. Preferably the body 52 and aperture 68 are sized such that a tight seam 79 is formed between the body 52 and the wall 74 of the aperture 68. The housing 50 is then preferably welded to the collar 26 around the seam.

Each clamping module 34 comprises a clamping member 36, which in this example is a moveable clamping block or clamping dog, which is slideable within the first bore 60 of the housing main body 52 in a radial direction towards or away from the collar axis 30. The first bore 60 has a cross-sectional shape or profile and the moveable clamping member 36 has a cross-sectional shape or profile that closely matches this profile such that the clamping member moves with a close sliding fit along the axis 61 of the first bore 60. In this example, this cross-sectional shape or profile of the clamping member 36 is cylindrical, and the first bore 60 has a matching cylindrical profile so that the clamping member 36 is constrained to move along the first bore axis 61. The first bore and clamping member may, however, have any matching profile. A first end 84 of the clamping member, closest to the collar axis 30, has a chamfered surface 86, for engagement with the flange 40 of the ring 24, as described further below. A second end 88 of the clamping member has an inclined surface 90, as shown most clearly in Figure 12.

The clamping module 34 also comprises a clamping actuator 33 for providing a driving force to the clamping member 36, whereby the clamping member may be driven to engage with the ring. In this example, the clamping actuator comprises a second movable member 35 and a force applicator 37 arranged to drive and move the second movable member in a linear direction that is at right angles to the first passageway or bore 60.

The second bore 62 holds the second movable member which acts as a drive member or drive dog 35. In this example, the drive member 35 has the shape of a wedge with two opposite flat sides 71, 73 that extend between an inclined side 96 and an opposite cylindrically curved side 94 as shown most clearly in Figures 6 and 11. The second bore 62 has a matching profile such that the drive member 35 is constrained to move along the second bore axis 63. The second bore and drive member may, however, have any matching profile.

In use, the inclined surface 96 of the second movable member is in sliding contact with the inclined surface 90 of the clamping member 36. The second movable member therefore acts as a wedge.

Both the second movable member 35 and clamping member 36 are preferably machined from steel.

The force applicator 37 is connected to the second movable member 35 and arranged to move the second movable member in opposite first and second axial directions along the axis 63 of the second bore 62. The force applicator 37 in this example is mechanical, comprising a bolt 82 threaded into a bore 83 in the second movable member 35.

The bolt 82 extends laterally away from the first bore axis 61 in a direction parallel with the second bore axis 63 beyond the bounds of the housing main body 52, and the drive member 35 also extends in an opposite direction parallel with the second bore axis 63 beyond the bounds of the housing main body 52. Therefore, to protect these components, the housing 50 comprises a pair of hollow cylindrical ends caps 53, 55 that are removably bolted to the housing main body 52. The housing also comprises a disc-like end cap 57 that closes the first bore 60. One of the cylindrical end caps 53 has a tapped hole 59 though which the bolt 82 is engaged.

During assembly of the connector portions 20, 22, the protruding end of the bolt 82 is pulled 81 by a tensioning tool (not shown) to drive the clamping member radially inwards towards the ring 24. The bolt is then secured in position by a lock nut 85 that is tightened on the bolt against the cylindrical end cap 53. The tensioning tool used to tension the bolt may be a hydraulic running tool that incorporates hydraulic cylinders and nut runners that simultaneously apply a tensile force to a rod connected to the drive member 35. Once a pre-defined load has been reached, one or more lock nuts 85 are then tightened to lock the drive member 35, and therefore the clamping member 36, in position.

Alternatively, the force applicator may comprise integral hydraulic cylinders. The clamping members 36 may alternatively be mechanically locked by other means, for example, threaded bolts or studs.

Activating the force applicator 37 to drive the drive member 35 in an axial direction causes the clamping member 36 to move radially due to the contact of the oppositely inclined surfaces 90, 96. In this way the drive member 35 functions as a cam block driving or allowing the clamping member 36 to move radially inwards and outwards, towards and away from the collar axis 30, respectively.

In particular, the contacting surfaces 96, 90 of the drive member 35 and clamping member 36 are inclined in the same direction with respect to the direction of motion of the drive member 35, such that when the drive member is moved in an upwards axial direction, the clamping member 36 is forced through the bore 60 in a radially inwards direction. Due to the position of the housing main body 52 in the collar 26, as the clamping member 36 moves radially inwards it extends through the aperture 68 in the collar clamping portion 45 and protrudes into the opening 32 of the collar 26. In this way the clamping member 36 is brought into clamping engagement with the ring 24. In particular, the clamping member 36 engages with a clamping surface 43 provided on the ring 24. The clamping surface 43 is provided on the flange 40 and is oppositely inclined with respect to the first alignment surface 42, such that the opposite upper and lower sides of the flange taper together as the flange extends radially away from the ring axis 28. The oppositely inclined flange surfaces 42, 43 are preferably separated by a cylindrical band 47 that extends parallel with the ring axis 28.

During the clamping process the drive member 35 is prevented from moving in an outwards radial direction by the housing 50 and so provides a restoring force to any resistance encountered by the movement of the clamping member 36. Additionally, the engagement of the flange 58 of the housing main body 52 with the shoulder 76 means that the housing 50 is not pushed out of the collar 26 by the clamping force exerted by the clamping member 36 on the ring 24.

As shown most clearly in Figure 9, the collar 26 includes a plurality of apertures 68 spaced apart around the circumference of the collar clamping portion 45 for receiving a corresponding plurality of clamping modules 34. Preferably, the apertures are equally spaced apart from each other. Each one of the housings 50 of the clamping modules 34 is received in a respective one of the apertures 68 as described above. Preferably the second connector portion 22 comprises between about ten and twenty clamping modules 34.

When the clamping members 36 are engaged with the ring 24 the chamfered surface 86 of each of the clamping members 36 contacts the clamping surface 43 of the ring 24. The flange 40 of the ring 24 is, therefore, clamped or gripped between the plurality of clamping members 36 and the lip 44 of the collar 26 in order to secure the ring within the collar, as shown in Figure 5.

To adjust and maintain the required tilt angle between the main tower 2 and the tubular base support 12, 112, an installation crane (not shown) initially supports the majority of the tower weight. Clamping members 36 on opposite sides of the connector assembly 1 are then actuated to adjust the tilt angle of the collar axis 30 relative to the ring axis 28. By driving the clamping members 36 on one side inwards by a greater distance than on the opposite side, the first and second alignment surfaces 42, 48 slide over each other, thereby tilting the collar 26 with respect to the ring 24. Once the correct tilt angle has been achieved to bring the main tower 2 to vertical, the remainder of the clamping members 36 can be brought into clamping engagement with the ring 24 to secure or fix the position of the connector assembly 1.

By forming the clamping modules 34 separately from the rest of the collar 26, the manufacture of the second connector portion 22 is substantially easier and less expensive than in prior art connectors. In particular, the collar clamping portion 45 and lip 44 may be formed in one piece from a forged or cast tubular section, in a similar way to the ring 24. Only minimal machining of the collar 26 may then be necessary to form the plurality of apertures 68 around the circumference of the collar clamping portion 45. The clamping modules 34 are each formed separately and then assembled together with the collar clamping portion. This means that it is not necessary to form the intersecting bores for receiving the clamping means within the collar itself. This reduces the complexity of the manufacturing process for the collar and, importantly, reduces the amount of material required to form the collar. This has advantages both in terms of the cost and ease of manufacture, as well as the ease of handling the second connector portion 22 in use.

Each clamping module 34 is designed mainly for single use, and for a long lifetime in salty conditions. Each of the bores 60, 62 within the housing main body 52 of the clamping module 34 may be packed with grease to ensure smooth movement of the sliding members 35, 36 and to minimise the rate of corrosion. The number of parts in the moving mechanism is kept to a minimum to ensure reliability, both when the clamping connection is made, and when the connection is to be released on disassembling the tower, which could be after a period as long as thirty years.

Although the connector assembly 1 described above has no spring or hydraulic mechanism to control the movement of the sliding members 35, 36 or to provide a retraction force to push the clamping member 36 to a retracted orientation, such features could be provided if necessary.

In the example embodiment described above, part of the housing 50 is received within a corresponding one of the apertures 68 in the collar clamping portion 45. It will be appreciated, however, that the housings may not extend into the apertures and may be attached to the external surface 72 of the collar clamping portion 45, for example by means of bolts, such that the first radially extending bore 61 in each housing is aligned with a respective aperture in the collar clamping portion. In this way, when the actuators are activated the clamping members are still arranged to extend radially inwards through the aperture to come into clamping engagement with the ring.

In another variation, the aperture may have a constant diameter through the thickness of the collar clamping portion, and the second mounting surface may be provided by a part of the radially inner surface 70 of the collar clamping portion 45, against which the housing main portion flange 58 is seated. The housing main body 52 is then inserted through the aperture from the radially inner surface towards the radially outer surface until the housing main portion flange contacts the inner surface of the collar. Securing means may then be used to secure the flange to the collar clamping portion 45. The securing means may comprise a weld, or the securing means may be in the form of a bolt or other mechanical securing means.

A second embodiment of a connector assembly 201 of the present invention is shown in Figures 13 to 21, as part of a submerged tide turbine assembly 200. The principles of operation of this connector assembly 201 are substantially the same those of the connector assembly 1 of the first embodiment.

In this embodiment of the invention, the connector assembly 201 is used to affix an upper tubular member 202 supporting a flowing water turbine 206 to a tubular base support 212 of a lower base structure 204. The lower base structure 204 comprises the tubular base support 212 mounted on a triangular base frame 213 secured to the seabed or river bed 211 by three tubular piles 208. Upper and lower electrical modules 291, 293 are connected respectively to the upper part of the turbine 206 and the tubular base support 212 thereby allowing electrical power to be drawn from the turbine. Although not shown in the drawings, it will be understood that necessary electrical connections are made between the upper and lower electrical modules. The electrical connections may be mounted externally as shown or internally, and engaged when the connector has been made up.

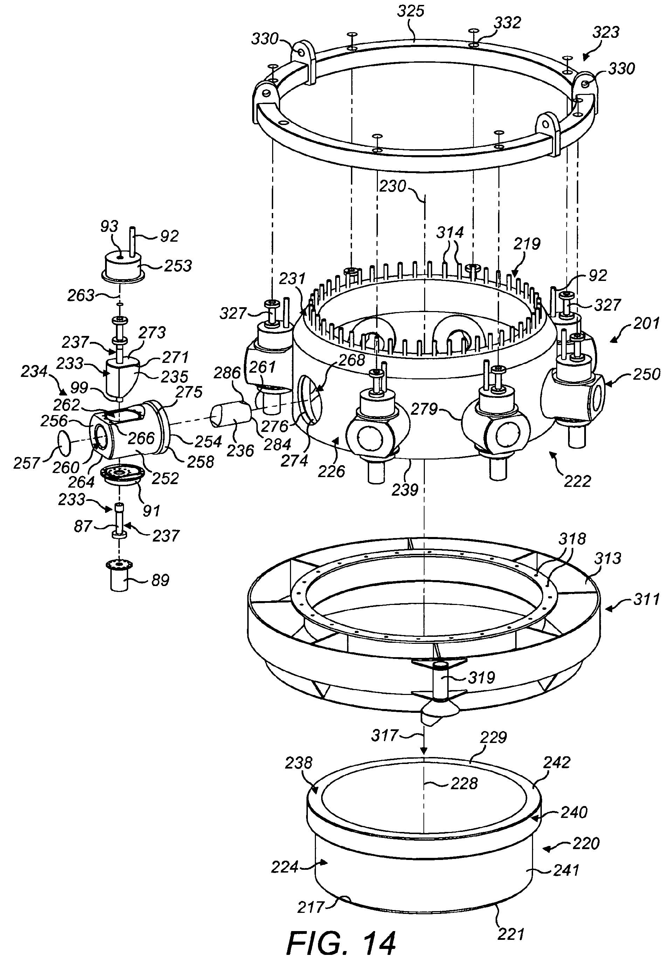

The connector assembly 201 is typically formed primarily from steel and comprises a first connector portion 220 and a second connector portion 222 both of which are generally circular and ring-shaped. The first connector portion 220 comprises ring 224 and the second connector portion comprises a collar 226. In this example, the ring 224 is a unitary or one-piece component and so the first connector portion 220 consists solely of the ring. Both the ring and collar have outermost and innermost prevailing profiles or surfaces that have a cylindrical symmetry. As shown most clearly in Figure 14, the ring 224 has a flange 240 which extends outwards from a main band or inner band 241 that extends fully around the inner circumference of the ring, between opposite axial ends 221, 229 of the ring. The flange 240, therefore, extends radially outwardly from the main band 241 of the ring.

The first connector portion 220 has at one axial end 221, which in this example is a lower end, a first mounting portion 217 that is welded or otherwise connected at a seam 215 to an upper end 203 of the lower tubular member 212. Welds may be facilitated by a flange or taper at the weld interface. The second connector portion 222 has at one axial end 231, which in this example is an upper end, a second mounting portion 219 that has tapped holes 318 for receiving bolts 314 that extend upwards to join with an annular connection flange 328 affixed to a lower end 207 of the turbine support tower 202. Although not illustrated in detail, the annular connection flange has clearance holes through which the upwardly extending bolts 314 pass and to which bolts are tightened.

An advantage of the use of bolts as opposed to a welded seam in this situation is that the turbine generator 206 and tubular support 202 can be detached from the connector portions after these have been joined and secured. The turbine generator 206 and tubular support 202 can also then be more easily disconnected from the tubular support 212 and raised to the surface 209 for servicing or repair.

The ring 224 has an annular seat 238 provided on a flange 240. The flange 240 extends radially outwardly from an axial end 229 of the ring 224, which in this example is an upper end. The seat 238 comprises a first alignment surface 242 in the form of a flat annular surface that extends in a plane at right angles to a ring axis 228 and which faces towards the second connector portion 222.

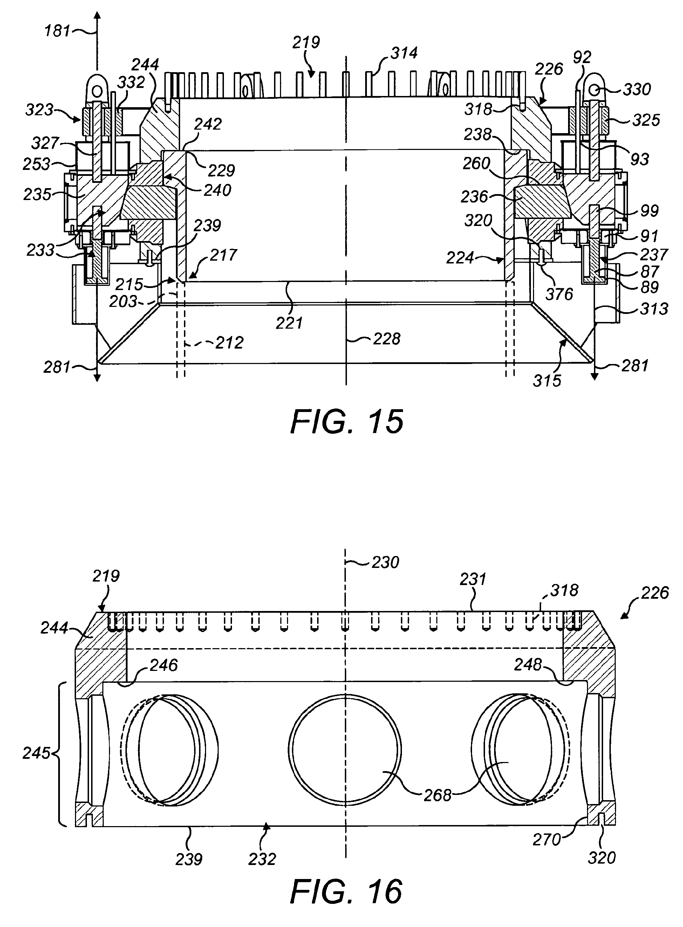

As shown most clearly in Figure 16, the collar 226 has a clamping portion 245 and a lip 244 that extends or projects radially inwardly from the clamping portion of the collar. The lip 244 and clamping portion 245 are directly adjacent one another in an axial direction. An axial end 239 of the clamping portion 245, which is here the lower end of the collar, has an opening 232 for receiving the ring 224 within the collar 226 after affixing the ring to the lower tubular member 212. The lip 244 extends radially inwardly around an opposite axial end 231 of the collar, which in this example is an upper end of the collar. The lip 244 provides an abutment 246 with a second alignment surface 248 in the form of a flat annular surface that extends in a plane at right angles to a collar axis 230 and which faces towards the first connector portion 220.

When the first and second connector portions 220, 222 are engaged with each other, the second alignment surface 248 of the abutment 246 contacts the first alignment surface 242 of the seat 238, such that the collar 226 is seated on the ring 224.

The difference between this embodiment and the first embodiment is that because both alignment surfaces 242, 248 are flat and at right angles to respective connector portion axes 228, 230, there is no tilt adjustment of these axes. The abutting contact is therefore along an interface that sets one defined orientation of the collar axis 230 relative to the ring axis 228, and in this example, these axes are collinear. It would, however, be possible to have one or both of the flat alignment surfaces 242, 248 set at an angle to their respective axes in order to define a fixed, non-collinear orientation of the two axes when the abutment 246 contacts the seat 238.

Both the ring and the collar are substantially circular or annular in shape such that the ring defines or extends around the ring axis 228, and the collar defines or extends around the collar axis 230. The clamping portion 245 of the collar 226 also provides the opening 232 of the collar for receiving the entire ring including the flange 240 of the ring 224 within the clamping portion of the collar 226. As such, when the seat 238 and abutment 246 of the first and second connector portions 220, 222 are engaged with each other, at least a part of the collar 226 surrounds the ring 224. The second connector portion 222 further comprises a plurality of clamping modules 234 each of which comprises clamping means 236 for clamping engagement of the ring 224 within the collar 226.

Each of the clamping modules 234 comprises a housing 250 that is secured to the collar 226. The housing 250 of each clamping module 234 has a generally cylindrical main body portion 252 that is received in a circular aperture 268 formed in the collar 226, in the same manner as previously described in relation to the first embodiment. In the embodiment illustrated most clearly in Figures 14 and 15, the housing main body 252 has opposing first and second ends 254, 256, the first end 254 being a flat annulus which is substantially flush with an adjacent cylindrical inner surface 270 of the collar clamping portion.

A projection in the form of an annular flange 258 extends outwardly around the main body 252 at the first end 254, this flange providing a mount with a first mounting surface 275. A first passageway or bore 260 extends through the body 252 from the first end 254 to the second end 256. A second passageway or bore 262 extends through the body 252 between the first side 264 and second side 266 of the body, in a direction substantially perpendicular to an axis 261 of the first bore 260. The second bore 262 therefore has an axis 263 that intersects the first bore 260 at 90°.

A side wall 274 of the aperture 268 includes around its periphery a shoulder 276, providing an inwardly directed second mounting surface that comes into abutting contact with the first mounting surface 275 to secure the housing to the collar 226 in the same manner as the first embodiment 1. Optionally, a seam 279 between each housing and the collar may be welded to prevent inward movement of the housing once seated in the aperture 268.

Each of the clamping members 236 in this example is a moveable clamping block or dog, which is slideable within the first bore 260 of the housing 250 in a radial direction towards or away from the collar axis 230. In this example, this cross-sectional shape or profile of the clamping member 236 is cylindrical, and the first bore 260 has a matching cylindrical profile so that the clamping member 236 is constrained to move along the first bore axis 261. The first bore and clamping member may, however, have any matching profile. A first end 284 of the clamping member 236, closest to the collar axis 230, has a chamfered surface 286, for engagement with a flange 240 of the ring 224, in a similar manner as described above in relation to the first embodiment. A second end 288 of the clamping member 236 has an inclined surface 290.

The clamping module 234 also comprises a clamping actuator 233 for providing a driving force to the clamping member 236 whereby the clamping member may be driven to engage with the ring. In this example, the clamping actuator comprises a second movable member 235 and a hydraulic force applicator 237 arranged to drive and move the second movable member in a linear direction that is at right angles to the first passageway or bore 260.

The second bore 262 holds the second movable member which acts as a drive member or drive dog 235. In this example, the drive member 235 has the shape of a wedge with two opposite flat sides 271, 273 that extend between an inclined side 296 and an opposite cylindrically curved side 294, as shown most clearly in Figures 14, 15 and 17. The second bore 262 has a matching profile so that the drive member 235 is constrained to move along the second bore axis 263. The second bore and drive member may, however, have any matching profile.

In use, the inclined surface 296 of the drive member 235 is in sliding contact with the inclined surface 290 of the clamping member 236. The second movable member therefore acts as a wedge. The arrangement of these inclined surfaces is opposite to that of the first embodiment so that the clamping member is driven inwards by downwards movement of the drive member, rather than by upwards movement of the drive member.

Both the second movable member 35 and clamping member 36 are preferably machined from steel.

A force applicator 237 is connected to the second movable member 235 and arranged to move the second movable member in opposite first and second axial directions along the axis 263 of the second bore 262. The force applicator 237 in this example is a hydraulic cylinder. Each force applicator 237 comprises a piston 87 attached to a post 99 that extends axially away from each of the corresponding drive members 235. The piston moves inside a hydraulic cylinder casing 89 mounted to a cylinder end plate 91 below the housing main body 252. As shown in Figures 14 and 15, the hydraulic cylinders 237 are configured to pull the drive members 235 downwards 281 to engage the clamping members 236 with the ring 224, and the ring is, therefore, clamped or gripped between the plurality of clamping members 236 and the lip 244 of the collar 226 in order to secure the ring within the collar.

The hydraulic cylinders 237 may optionally also be arranged to push the drive members 235 in an opposite direction upwards 181 to release the clamping members 236 from the ring 224.

Once the drive members 235 are fully tensioned downwards, these may be secured in place by means of securing bolts 92 that engage with a tapped hole 93 in a housing end cap 253 and which when tightened move to press down against the drive member 235.

Alternatively, the force applicator may comprise a threaded bolt and lock nut arrangement as in the first embodiment, which is tensioned by a hydraulic running tool and set in position by a securing nut as described above.

As shown most clearly in Figures 14, 15 and 19, a guide assembly 311 is connected to a lower axial end 239 of the collar 226 such that the guide assembly 311 extends around the opening 232. The guide assembly 311 is preferably secured to the collar 226 by means of mechanical fastening means, such as bolts 376 that pass through clearance holes 318 in the guide assembly to engage with bolt holes 320 extending around the circumference of the collar lower end; however, the guide assembly 311 may be secured to the collar 226 using any suitable means.

The guide assembly 311 comprises a generally annular main body 313 having an angled or flared inner surface 315, which in this example is a funnel entrance having a frustoconical surface. Typically the flared inner surface 315 is at an angle of about 45° to a direction 317 in which the collar 226 is moved towards the ring 224. The flared inner surface 315 thereby forms a conical capture region of the guide assembly 311. In use, the guide assembly, and in particular the capture region, provides circumferential guidance for locating the collar 226 over and around the ring 224 during engagement of the first and second connector portions 220, 222.

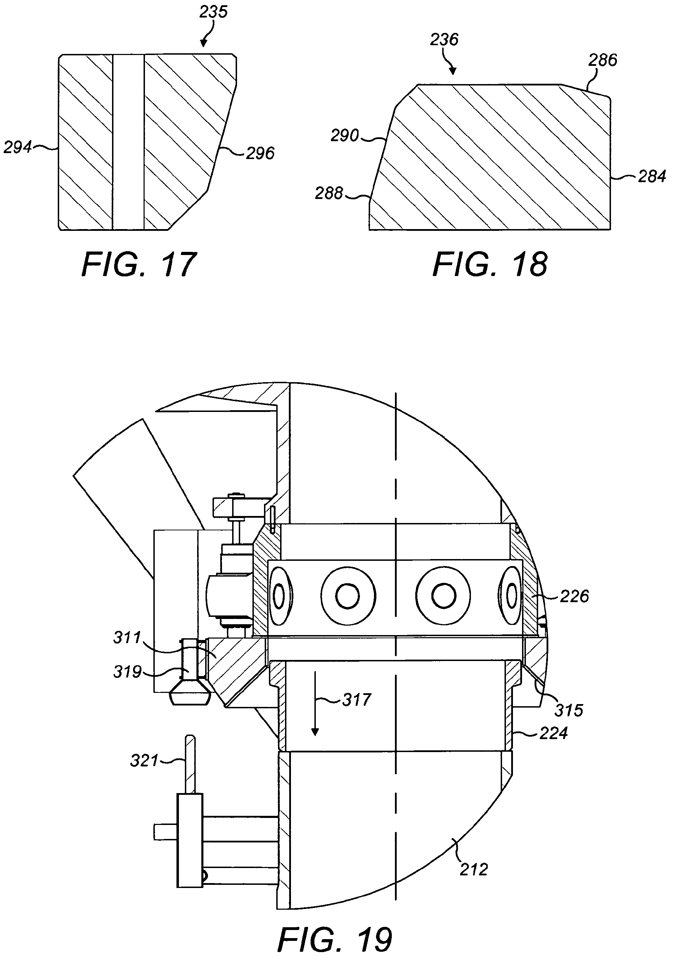

In this embodiment, the guide assembly 311 further comprises a guide post receptacle 319. A corresponding guide post 321 is attached to an upper part of the tubular base support 212. The guide post 321 and guide post receptacle 319 are arranged such that, when the second connector portion 222 is engaged with the first connector portion 220 in the correct orientation, the guide post 321 is received within the guide post receptacle 319, as shown most clearly in Figures 19 to 21. This ensures the correct positioning and orientation of the upper part of the turbine 206 with respect to the tubular base support 212.

The connector assembly 201 may also comprise a secondary release assembly 323. In this embodiment, the secondary release assembly 323 comprises a lifting ring 325 secured to a part of the force applicator 237. As shown most clearly in Figure 14, the lifting ring 325 is attached to release rods 327 that extend upwards from each of the drive members 235. The lifting ring 325 has lugs 330, which can be connected to slings, or other cable means, from a vessel or structure above the surface of the body of water in which the turbine is located. In the event of a failure of the hydraulic force applicator 237, a vertical pull can be exerted by the slings thereby pulling the drive members 235 upwards 181. This releases the clamping members 236 and allows the upper part of the turbine 206 to be retrieved to the surface of the water 209.

In alternative embodiments, hydraulic jacks or similar lifting means may be positioned beneath the lifting ring 325 so as to provide a lifting force on the lifting ring 325 to release the clamping members 236.

Prior to lifting of the lifting ring, if securing means such as the securing bolts 92 have been used to secure the drive members in a fully engaged position with the clamping members, then the securing means must first be released. In this example, the securing bolts pass through clearance holes 332 in the lifting ring, such that a top end of each securing bolt can be turned in order to loosen each securing bolt and allow each of the drive members to be pulled upwards by the lifting ring in order to release the engagement of the drive members with the clamping members. The clearance holes 332 may also be of use in setting the securing bolts 92, by guiding each securing bolt into the corresponding tapped hole 59 in the housing end cap 253.

It should be noted that although the invention is particularly applicable to cases in which the assembled tubular members are upright in a substantially vertical orientation, the invention is also applicable to other structures where the axial alignment of neighbouring tubular members needs to be adjustable or in which an assembled structure is upright at a substantial angle to vertical, for example when used as an arch or brace as part of a larger structure.

The connector assemblies 1, 201 of the present invention have a ring and collar both of which are substantially circular. A further advantage of the invention is that a secure connection can be made between the connector components even when the collar 26, 226 and/or ring 24, 224 are not perfectly circular, i.e. the collar and/or ring are at their maximum or minimum tolerance and have an oval or elliptical shape. This is achieved in part by providing a sufficient gap between the flange or the ring and the inner surfaces of the collar clamping portion and in part because each of the clamping modules 34, 234 may be actuated independently, such that each of the clamping members 36, 236 is driven inwards by a different distance to compensate for the non-circularity of the collar 26, 226 and/or ring 24, 224.

The collar and/or ring may be made from forged steel in order to maximise strength of the connector assembly. It is however, difficult and expensive to forge metal components having a large diameter, for example a diameter greater than about 3 m. Cast metal is less expensive to form, however, in either case it is generally desirable to minimise the extent of any necessary machining of cast surfaces. Therefore, it is preferable if the collar and/or the ring are a machined casting, with only those surfaces needing to have close tolerances being machined, for example the surfaces forming the seat and abutment between the inwardly directed lip and the outwardly directed flange, or the surfaces along the interface where each clamping module is affixed to the collar clamping portion. In this respect, it should be appreciated that the drawings, which show only smooth continuous outer surfaces of the collar and ring, are only schematic, and it is only necessary that those surfaces making contact between the collar and ring, or between adjacent components of the collar assembly, are formed or machined to achieve desired tolerances.

A particular advantage of the invention is that the clamping modules are separate components from the collar clamping portion. It is therefore not necessary to machine channels or guides into the clamping portion for supporting and guiding movement of parts of the clamping actuator or clamping member. This greatly simplifies the formation of the collar, as the clamping portion can be substantially cylindrical, as in the preferred embodiments of the invention described above.

It should also be noted that although the invention has been described in detail with embodiments in which the first connection portion (i.e. the ring) having the first mounting portion is affixed at the upper end of the lower tubular member, and in which the second connector portion (i.e. the collar) having the second mounting portion is affixed at the lower end of the upper tubular member, the invention is also applicable to the case where the first mounting portion is affixed at the lower end of the upper tubular member and the second mounting portion is affixed at the upper end of the lower tubular member. In this alternative configuration, the abutment is provided by the flange of the ring and the seat is provided by the lip of the collar.

Regarding the preferred number of clamping modules, this will depend on various factors, such as the diameter of the first and second connector portions, the loads to be born by each clamping module, and the accuracy of the desired tilt adjustment, if any. In principle, there could be just two clamping modules spaced 120° apart from each other around the circumference of the connector portions, with a third fixed point of engagement between the connector portions at a circumferential midpoint spaced 120° from each of the two clamping modules.

When tilt adjustment is needed, such an arrangement would, however, in general require pre-rotation of the two connector portions to a particular orientation with respect to each other in order to allow the angle of the main tower to be adjusted to vertical. Therefore, in general, at least three equally spaced-apart clamping modules are desired in order to avoid the need to pre-rotate the connector portions. In the examples, given above, there are sixteen clamping modules in the first embodiment and eight clamping modules in the second embodiment, which provides the benefit of distributing the load between the first and second connector portions more evenly around the circumference of the connector assembly.

It should be noted that although the invention has been described with particular reference to a horizontal axis wind turbine tower and a horizontal axis water turbine tower for generating electricity, the invention is applicable to other types of turbine tower whether air or water driven including towers supporting vertical axis turbines. The general principles of the invention are, however, not limited to renewable energy turbines, but are also applicable to the joining together of an upper tubular member and a lower tubular member in other technical fields, particularly large diameter tubular members, i.e. those having a diameter of about 5 m or more, when the tubular members are to be joined together in any upright configuration, whether or not this is a vertical orientation, especially when weight is transferred from an upper tubular member to a lower tubular member.

It is to be recognized that various alterations, modifications, and/or additions may be introduced into the constructions and arrangements of parts described above without departing from the scope of the present invention, as defined by the appended claims.

## Claims

1. A connector assembly (1, 201) for affixing an upper tubular member (2, 202) to a lower tubular member (12, 112, 212) in an upright configuration of said tubular members, the connector assembly comprising a first connector portion (20, 220) and a second connector portion (22, 222), the first connector portion having a first mounting portion (17, 217) and the second connector portion (22, 222) having a second mounting portion (19, 219), one of said mounting portions being for affixing at an upper end (3, 203) of said lower tubular member (12, 112, 212) and the other of said mounting portions being for affixing at a lower end (7, 207) of said upper tubular member (2, 202), the first connector portion comprising a ring (24, 224), the ring extending around a ring axis (28, 228) and comprising a radially outwardly directed flange (40, 240), and the second connector portion (22, 222) comprising a collar (26, 226) and a plurality of clamping modules (34, 234), the collar extending around a collar axis (30, 230) and comprising a clamping portion (45, 245) and a radially inwardly directed lip (44, 244), wherein:
- the clamping portion (45, 245) of the collar has an opening for receiving the ring (24, 224) whereby the ring may, in use, be received within the collar (26, 226) in a substantially coaxial orientation with the flange (40, 240) in abutting contact with the lip (44, 244);
- the clamping portion (45, 245) of the collar has a plurality of apertures (68, 268), each aperture extending through said clamping portion in a radial direction and said apertures being spaced apart from each other around a circumference of said clamping portion;
- each clamping module (34, 234) comprises a housing (50, 250), a clamping member (36, 236) and a clamping actuator (33, 233), said clamping member being movably held within said housing and said clamping actuator being configured to drive said movement of the clamping member; and whereby each clamping member (36, 236) when driven by the clamping actuator (33, 233) moves radially inwards through said corresponding aperture (68, 268) towards the ring (24, 224) received within the collar (26, 226) whereby said flange (40, 240) is clamped between the lip (44, 244) and said clamping members (36, 236) in order to secure the ring within the collar, **characterized in that**
- each of said housings (50, 250) is separately affixed to the clamping portion (45, 245) of the collar at a corresponding one of said apertures (68, 268).

2. A connector assembly (1, 201) as claimed in Claim 1, in which each housing (50, 250) extends through the respective aperture (68, 268) in the clamping portion (45, 245) of the collar.

3. A connector assembly (1, 201) as claimed in Claim 1 or Claim 2, in which each of said housings (50, 250) has a mount (58, 258), said mount being in abutting contact with a mounting feature (76, 276) of the clamping portion (45, 245) of the collar, said abutting contact securing the housing against radially outward movement of the housing (50, 250).

4. A connector assembly (1, 201) as claimed in Claim 3, in which the housing (50, 250) comprises a main body (52, 252) and the mount is provided by a projection (58, 258) from the main body of the housing.

5. A connector assembly (1, 201) as claimed in Claim 3 or Claim 4, in which the mounting feature of the clamping portion (45, 245) of the collar (26, 226) is an inwardly directed surface (76, 276) inside the aperture (68, 268).

6. A connector assembly (1, 201) as claimed in Claim 5, in which said inwardly directed surface is a shoulder (76, 276) in a side wall (74, 274) of the aperture (68, 268).

7. A connector assembly (1, 201) as claimed in Claim 6 or Claim 7, in which said projection (58, 258) and said shoulder (76, 276) have matching annular shapes.

8. A connector assembly (1, 201) as claimed in any preceding claim, in which each housing (50, 250) when affixed to the clamping portion (45, 245) of the collar, has an end (54, 254) which is substantially flush with a radially inner surface (70, 270) of said clamping portion (45, 245).

9. A connector assembly (1, 201) as claimed in any preceding claim, in which each housing (50, 250) comprises a first passageway (60, 260) and a second passageway (62, 262), said movement of the clamping member (36, 236) being guided by the first passageway (60, 260), and the clamping actuator (33, 233) being movably held in the second passageway (62, 262), and the second passageway intersecting the first passageway.

10. A connector assembly (1) as claimed in any preceding claim, in which the flange (40) has a first alignment surface (42) and the lip (44) has a second alignment surface (48), said alignment surfaces (42, 48) permitting relative tilt adjustment between the ring axis (28) and the collar axis (30) prior to said clamping of the flange.

11. A connector assembly (1) as claimed in Claim 10, in which said alignment surfaces (42, 48) are in contact along a part spherical interface.

12. A connector assembly (201) as claimed in any one of Claims 1 to 9, in which the flange (240) has a first alignment surface (242) and the lip (244) has a second alignment surface (248), said alignment surfaces permitting one relative angle of the ring axis (228) relative to the collar axis (230) prior to said clamping of the flange.

13. A connector assembly (1, 201) as claimed in any preceding claim, in which said clamping modules (34, 234) are spaced apart from one another around the circumference of the collar (26, 226).

14. An assembly of an upper tubular member (2, 202) and a lower tubular member (12, 112, 212), said tubular members being joined together by a connector assembly, said connector assembly (1, 201) being as claimed in any preceding claim.

15. An assembly as claimed in Claim 14, in which the upper tubular member is a turbine tower (2, 202) supporting a bladed fluid flow electrical generator and in which the lower tubular member (12, 112, 212) is comprised in a supporting structure (4, 104, 204) for the turbine tower.

## Patentansprüche

1. Verbindungsanordnung (1, 201) zum Verbinden eines oberen rohrförmigen Elements (2, 202) mit einem unteren rohrförmigen Element (12, 112, 212) in aufrechter Ausrichtung der rohrförmigen Elemente, wobei die Verbindungsanordnung einen ersten Verbindungsabschnitt (20, 220) und einen zweiten Verbindungsabschnitt (22, 222) umfasst, wobei der erste Verbindungsabschnitt einen ersten Montageabschnitt (17, 217) und der zweite Verbindungsabschnitt (22, 222) einen zweiten Montageabschnitt (19, 219) aufweist, wobei einer der Montageabschnitte zum Anbringen eines oberen Endes (3, 203) des unteren rohrförmigen Elements (12, 112, 212) und der andere der Montageabschnitte zum Anbringen eines unteren Endes (7, 207) des oberen rohrförmigen Elements (2, 202) dient, wobei der ersten Verbindungsabschnitt einen Ring (24, 224) umfasst, wobei der Ring sich um eine Ringachse (28, 228) erstreckt und einen radial nach außen gerichteten Flansch (40, 240) umfasst, und wobei der zweite Verbindungsabschnitt (22, 222) einen Kragen (26, 226) und eine Mehrzahl Klemmmodule (34, 234) umfasst, wobei sich der Kragen um eine Kragenachse (30, 230) herum erstreckt und einen Klemmabschnitt (45, 245) und eine radial nach innen weisende Lippe (44, 244) umfasst, wobei:
- der Klemmabschnitt (45, 245) des Kragens eine Aufnahmeöffnung zur Aufnahme des Rings (24, 224) aufweist, wodurch der Ring im Gebrauchszustand innerhalb des Kragens (26, 226) in einer im Wesentlichen mit dem Flansch (40, 240) koaxialen Ausrichtung in Anlagekontakt mit der Lippe (44, 244) aufgenommen werden kann;
- der Klemmabschnitt (45, 245) des Kragens eine Mehrzahl Öffnungen (68, 268) aufweist, wobei jede Öffnung sich durch den Klemmabschnitt hindurch in Radialrichtung erstreckt und die Öffnungen voneinander beabstan-det um einen Umfang des Klemmabschnitts angeordnet sind;
- jedes Klemmmodul (34, 234) ein Gehäuse (50, 250), ein Klemmelement (36, 236) und einen Klemmaktuator (33, 233) umfasst, wobei das Klemmelement beweglich innerhalb des Gehäuses gehalten wird und der Klemmaktuator so ausgelegt ist, dass er diese Bewegung des Klemmelements bewirken kann; und wobei jedes Klemmelement (36, 236), wenn es durch den Klemmaktuator (33, 233) betätigt wird, sich radial nach innen durch die entsprechende Öffnung (68, 268) hindurch in Richtung des in den Kragen (26, 226) aufgenommenen Rings (24, 224) bewegt, wodurch der Flansch (40, 240) zwischen der Lippe (44, 244) und den Klemmelementen (36, 236) eingeklemmt wird, um den Ring innerhalb des Kragens festzuhalten,
**dadurch gekennzeichnet,**
**dass** jedes der Gehäuse (50, 250) separat am Klemmabschnitt (45, 245) des Kragens an einer entsprechenden Öffnung (68, 268) angebracht ist.

2. Verbindungsanordnung (1, 201) nach Anspruch 1,
bei der jedes Gehäuse (50, 250) sich durch die entsprechende Öffnung (68, 268) hindurch im Klemmabschnitt (45, 245) des Kragens erstreckt.

3. Verbindungsanordnung (1, 201) nach Anspruch 1 oder Anspruch 2,
bei der jedes der Gehäuse (50, 250) ein Montageelement (58, 258) aufweist, wobei das Montageelement sich im Anlagekontakt mit einer Montageeinrichtung (76, 276) des Klemmabschnitts (45, 245) des Kragens befindet, wobei der Anlagekontakt das Gehäuse gegen eine radiale Bewegung des Gehäuses (50, 250) nach außen sichert.

4. Verbindungsanordnung (1, 201) nach Anspruch 3,
bei der das Gehäuse (50, 250) einen Grundkörper (52, 252) umfasst und das Montageelement durch einen aus dem Grundkörper des Gehäuses herausstehenden Vorsprung (58, 258) gebildet ist.

5. Verbindungsanordnung (1, 201) nach Anspruch 3 oder Anspruch 4,
bei der die Montageeinrichtung des Klemmabschnitts (45, 245) des Kragens (26, 226) eine nach innen gerichtete Fläche (76, 276) innerhalb der Öffnung (68, 268) ist.

6. Verbindungsanordnung (1, 201) nach Anspruch 5,
bei der die nach innen gerichtete Fläche eine Schulter (76, 276) in einer Seitenwand (74, 274) der Öffnung (68, 268) ist.

7. Verbindungsanordnung (1, 201) nach Anspruch 6 oder Anspruch 7,
bei der der Vorsprung (58, 258) und die Schulter (76, 276) zueinander passende ringförmige Formen aufweisen.

8. Verbindungsanordnung (1, 201) nach einem der vorigen Ansprüche,
bei der jedes Gehäuse (50, 250), wenn es an dem Klemmabschnitt (45, 245) des Kragens befestigt ist, ein Ende (54, 254) aufweist, welches im Wesentlichen bündig mit einer radial betrachtet innen liegenden Fläche (70, 270) des Klemmabschnitts (45, 245) angeordnet ist.

9. Verbindungsanordnung (1, 201) nach einem der vorigen Ansprüche,
bei der jedes Gehäuse (50, 250) einen ersten Durchgang (60, 260) und einen zweiten Durchgang (62, 262) umfasst, wobei die Bewegung des Klemmelements (36, 236) durch den ersten Durchgang (60, 260) geführt wird, und wobei der Klemmaktuator (33, 233) beweglich in dem zweiten Durchgang (62, 262) gehalten wird, und wobei der zweite Durchgang den ersten Durchgang kreuzt.

10. Verbindungsanordnung (1, 201) nach einem der vorigen Ansprüche,
bei der der Flansch (40) eine erste Ausrichtfläche (42) aufweist und die Lippe (44) eine zweite Ausrichtfläche (48) aufweist, wobei die Ausrichtflächen (42, 48) eine relativ zueinander erfolgende Kippeinstellung zwischen der Ringachse (28) und der Kragenachse (30) vor dem Festklemmen des Flansches ermöglichen.

11. Verbindungsanordnung (1) nach Anspruch 10,
bei der die Ausrichtflächen (42, 48) sich entlang einer teilsphärischen Schnittstelle berühren.

12. Verbindungsanordnung (201) nach einem der Ansprüche 1 bis 9,
bei der der Flansch (40) eine erste Ausrichtfläche (242) und die Lippe (244) eine zweite Ausrichtfläche (248) aufweist, wobei die Ausrichtflächen das Einstellen eines Relativwinkels der Ringachse (228) relativ zur Kragenachse (230) vor dem Festklemmen des Flansches ermöglichen.

13. Verbindungsanordnung (1, 201) nach einem der vorigen Ansprüche,
bei der die Klemmmodule (34, 234) voneinander beabstan-det um den Umfang des Kragens (26, 226) herum angeordnet sind.

14. Anordnung eines oberen rohrförmigen Elements (2, 202) und eines unteren rohrförmigen Elements (12, 112, 212), wobei die rohrförmigen Elemente mittels einer Verbindungsanordnung verbunden sind, wobei die Verbindungsanordnung (1, 201) nach einem der vorigen Ansprüche ausgebildet ist.

15. Anordnung nach Anspruch 14,
bei der das obere rohrförmige Element ein Turbinenturm (2, 202) ist, welcher einen elektrischen Flügelfluidströmungsgenerator trägt und in welchem das untere rohrförmige Element (12, 112, 212) von einer Stützstruktur (4, 104, 204) des Turbinenturms umfasst ist.

## Revendications

1. Ensemble connecteur (1, 201) pour fixer un élément tubulaire supérieur (2, 202) à un élément tubulaire inférieur (12, 112, 212) dans une configuration verticale desdits éléments tubulaires, l'ensemble connecteur comprenant une première partie de connecteur (20, 220) et une seconde partie de connecteur (22, 222), la première partie de connecteur ayant une première partie de montage (17, 217) et la seconde partie de connecteur (22, 222) ayant une seconde partie de montage (19, 219), l'une desdites parties de montage étant destinée à une fixation au niveau d'une extrémité supérieure (3, 203) dudit élément tubulaire inférieur (12, 112, 212) et l'autre desdites parties de montage étant destinée à une fixation au niveau d'une extrémité inférieure (7 ,207) dudit élément tubulaire supérieur (2, 202), la première partie de connecteur comprenant une bague (24, 224), la bague s'étendant autour d'un axe de bague (28, 228) et comprenant une bride dirigée radialement vers l'extérieur (40, 240), et la seconde partie de connecteur (22, 222) comprenant un collier (26, 226) et une pluralité de modules de serrage (34, 234), le collier s'étendant autour d'un axe de collier (30, 230) et comprenant une partie de serrage (45, 245) et une lèvre dirigée radialement vers l'intérieur (44, 244), dans lequel :
- la partie de serrage (45, 245) du collier a une ouverture pour recevoir la bague (24, 224), ce par quoi la bague peut, en utilisation, être reçue à l'intérieur du collier (26, 226) dans une orientation sensiblement coaxiale à la bride (40, 240) en contact de butée avec la lèvre (44, 244) ;
- la partie de serrage (45, 245) du collier a une pluralité d'orifices (68, 268), chaque orifice s'étendant à travers ladite partie de serrage dans une direction radiale et lesdits orifices étant espacés les uns des autres autour d'une circonférence de ladite partie de serrage ;
- chaque module de serrage (34, 234) comprend un boîtier (50, 250), un élément de serrage (36, 236) et un actionneur de serrage (33,233), ledit élément de serrage étant maintenu de façon mobile à l'intérieur dudit boîtier et ledit actionneur de serrage étant configuré pour entraîner ledit mouvement dudit élément de serrage ; et ce par quoi chaque élément de serrage (36, 236), lorsqu'il est entraîné par l'actionneur de serrage (33, 233), se déplace radialement vers l'intérieur à travers ledit orifice correspondant (68, 268) vers la bague (24, 224) reçue à l'intérieur du collier (26, 226), ce par quoi ladite bride (40, 240) est serrée entre la lèvre (44, 244) et lesdits éléments de serrage (36, 236) afin de fixer la bague à l'intérieur du collier ,
**caractérisé par le fait que** :
- chacun desdits boîtiers (50, 250) est fixé de façon séparée à la partie de serrage (45, 245) du collier au niveau de l'un correspondant parmi lesdits orifices (68, 268).

2. Ensemble connecteur (1, 201) selon la revendication 1, dans lequel chaque boîtier (50, 250) s'étend à travers l'orifice respectif (68, 268) dans la partie de serrage (45, 245) du collier.

3. Ensemble connecteur (1, 201) selon la revendication 1 ou la revendication 2, dans lequel chacun desdits boîtiers (50, 250) a une monture (58, 258), ladite monture étant en contact de butée avec une caractéristique de montage (76, 276) de la partie de serrage (45, 245) du collier, ledit contact de butée fixant le boîtier vis-à-vis d'un mouvement radialement vers l'extérieur du boîtier (50, 250).

4. Ensemble connecteur (1, 201) selon la revendication 3, dans lequel le boîtier (50, 250) comprend un corps principal (52, 252) et la monture est formée par une saillie (58, 258) à partir du corps principal du boîtier.

5. Ensemble connecteur (1, 201) selon la revendication 3 ou la revendication 4, dans lequel la caractéristique de montage de la partie de serrage (45, 245) du collier (26, 226) est une surface dirigée vers l'intérieur (76, 276) à l'intérieur de l'orifice (68, 268).

6. Ensemble connecteur (1, 201) selon la revendication 5, dans lequel ladite surface dirigée vers l'intérieur est un épaulement (76, 276) dans une paroi latérale (74, 274) de l'orifice (68, 268).

7. Ensemble connecteur (1, 201) selon la revendication 6 ou la revendication 7, dans lequel ladite saillie (58, 258) et ledit épaulement (76, 276) ont des formes annulaires correspondantes.

8. Ensemble connecteur (1, 201) selon l'une quelconque des revendications précédentes, dans lequel chaque boîtier (50, 250), lorsqu'il est fixé à la partie de serrage (45, 245) du collier, a une extrémité (54, 254) qui est sensiblement alignée avec une surface radialement interne (70, 270) de ladite partie de serrage (45, 245).

9. Ensemble connecteur (1, 201) selon l'une quelconque des revendications précédentes, dans lequel chaque boîtier (50, 250) comprend un premier passage (60, 260) et un second passage (62, 262), ledit mouvement de l'élément de serrage (36, 236) étant guidé par le premier passage (60, 260), et l'actionneur de serrage (33, 233) étant maintenu de façon mobile dans le second passage (62, 262), et le second passage coupant le premier passage.

10. Ensemble connecteur (1) selon l'une quelconque des revendications précédentes, dans lequel la bride (40) a une première surface d'alignement (42) et la lèvre (44) a une seconde surface d'alignement (48), lesdites surfaces d'alignement (42, 48) permettant un ajustement d'inclinaison relatif entre l'axe de bague (28) et l'axe de collier (30) avant ledit serrage de la bride.

11. Ensemble connecteur (1) selon la revendication 10, dans lequel lesdites surfaces d'alignement (42, 48) sont en contact le long d'une interface en partie sphérique.

12. Ensemble connecteur (201) selon l'une quelconque des revendications 1 à 9, dans lequel la bride (240) a une première surface d'alignement (242) et la lèvre (244) a une seconde surface d'alignement (248), lesdites surfaces d'alignement permettant un angle relatif de l'axe de bague (228) par rapport à l'axe de collier (30) avant ledit serrage de la bride.

13. Ensemble connecteur (1, 201) selon l'une quelconque des revendications précédentes, dans lequel lesdits modules de serrage (34, 234) sont espacés les uns des autres autour de la circonférence du collier (26, 226).

14. Ensemble d'un élément tubulaire supérieur (2, 202) et d'un élément tubulaire inférieur (12, 112, 212), lesdits éléments tubulaires étant reliés ensemble par un ensemble connecteur, ledit ensemble connecteur (1, 201) étant tel que revendiqué dans l'une quelconque des revendications précédentes.

15. Ensemble selon la revendication 14, dans lequel l'élément tubulaire supérieur est une tour de turbine (2, 202) supportant un générateur électrique à écoulement de fluide, à pales, et dans lequel l'élément tubulaire inférieur (12, 112, 212) est compris dans une structure de support (4, 104, 204) pour la tour de turbine.
